# EUROPEAN PATENT SPECIFICATION

(11) **EP 3 103 982 B1**
(45) Date of publication and mention of the grant of the patent: **27.09.2017**
(21) Application number: 15171417.7
(22) Date of filing: 10.06.2015
(51) Int. Cl.: F01P 11/20, F24H 1/00, F02N 19/10

(54) **HEATING SYSTEM COMPRISING AN ELECTRICALLY OPERATED HEATER FOR HEATING A HEAT TRANSPORT LIQUID**
ELEKTRISCH BETRIEBENE HEIZUNG ZUR ERWÄRMUNG EINER WÄRMETRANSPORTFLÜSSIGKEIT
CHAUFFAGE À COMMANDE ÉLECTRIQUE POUR LIQUIDE DE TRANSPORT DE CHALEUR

(43) Date of publication of application: 14.12.2016
(73) Proprietor: Eberspächer AB, 461 38 Trollhättan (SE)
(72) Inventor: Arvidsson, Svante, 46241 Vänersborg (SE); Eriksson, Fredrik J., 46152 Trollhättan (SE); Hermansson, Patrik, 46144 Trollhättan (SE)
(74) Representative: RLTG

(56) References cited:
- US-A- 3 236 220
- US-A- 3 673 379
- US-A- 4 398 081

## Description

The present invention relates to a heating system comprising an electrically operated heater for heating a heat transport liquid, for example, for heating coolant circulated in a coolant circuit of a combustion engine of a vehicle.

For preheating the engine and/or the interior space of a vehicle, it is known to use fuel-operated heating devices. Due to the exhaust gases generated by fuel-operated heating devices, such devices cannot normally be used in closed areas, for example, closed garages. For avoiding this problem, an electrically operated heater may be provided which can be connected to the mains providing an AC voltage supply system. The AC voltage supplied by the AC voltage supply system is applied to the heater for generating heat which can be transferred to the coolant provided as a heat transport liquid within the coolant circuit of a combustion engine.

US 3 673 379 A discloses a motor vehicle warm-up and battery charger system in which an AC voltage supplied by a mains connected to the system is applied to an electrically operated engine heater. The AC voltage additionally is converted into a DC voltage which can be applied to a battery for recharging the battery or which can be applied to this battery and in parallel thereto to a heater blower motor.

US 4 398 081 A discloses a standby heating and power supply system for a motor vehicle in which an electrically operated heater and a pump are energized by an AC voltage applied to the system.

US 3 236 220 A discloses an auxiliary automatic heat exchange system for internal combustion engines in which a fuel operated heater is used for heating the coolant circulated in a coolant circuit by means of a heat exchanger provided in this coolant circuit. A pump provided for circulating the coolant is energized either by means of a DC voltage provided by converting an AC voltage or by means of a DC voltage provided by a battery.

It is an object of the present invention to provide a heating system comprising an electrically operated heater, by means of which the heat generated by the heater can be transferred to a heat transport liquid while providing a simple construction.

According to the present invention, this object is achieved by a heating system for heating a heat transport liquid, in particular for heating coolant in a coolant circuit of a combustion engine of a vehicle, comprising:
- a heat transport liquid pump for circulating a heat transport liquid in a heat transport liquid circuit,
- an electrically operated heater for heating the heat transport liquid circulated in the heat transport liquid circuit comprising:
   - a first connecting means for providing an electric connection between the heater and an AC voltage supply system,
   - an AC/DC converter (28) for generating a DC voltage for energizing the heat transport liquid pump (16) in a condition in which an AC voltage is applied to the first connecting means (22),
wherein the AC/DC converter is arranged such as to generate the DC voltage for energizing the heat transport liquid pump in a condition in which an AC voltage is applied to the first connecting means.

When using the heater of the present invention, the heat transport liquid pump is energized by the DC voltage generated by the AC/DC converter based on the AC voltage applied to the first connecting means. Therefore the use of a DC voltage supply system of a vehicle for energizing the heater in a condition in which the vehicle is not operated can be avoided.

For providing a simple and compact construction, the first connecting means and/or the AC/DC converter means may be integrated into the heater.

For energizing the heat transport liquid pump this pump may be electrically connected to the AC/DC converter for applying the DC voltage generated by the AC/DC converter to the heat transport liquid pump in a condition in which an AC voltage is applied to the first connecting means.

As a further power source a DC voltage supply system comprising at least one rechargeable battery may be provided.

For using the heat generated by the heater not only to preheat the combustion engine, but for example to additionally preheat the interior space of a vehicle a heat exchanger arrangement comprising a fan for transferring heat from the heat transport liquid to air may be provided, and the system may further comprise a second connecting means for applying the DC voltage supplied by the DC voltage supply system to the fan in a condition in which an AC voltage is applied to the first connecting means and a temperature of the heat transport liquid is above a predetermined threshold temperature.

For enabling the heating system to control the operation of the fan based on the temperature of the combustion engine and the heat transport liquid, respectively, the second connecting means may comprise a thermostat-controlled relay.

In an alternative embodiment a heat exchanger arrangement comprising a fan for transferring heat from the heat transport liquid to air may be provided, and the system may further comprise a second connecting means for applying the DC voltage supplied by the DC voltage supply system to the fan in a condition in which an AC voltage is applied to the first connecting means and a predetermined period of time has elapsed since the heating operation of the heater has started.

For enabling the use DC voltage supply system for energizing the fan, the second connecting means may comprise a relay for receiving a switching voltage and for applying the DC voltage supplied by the DC voltage supply system to the fan in a condition in which the switching voltage is applied to the relay. This relay may be a DC/DC relay for receiving the DC voltage generated by the AC/DC converter as the switching voltage and for applying the DC Voltage supplied by the DC voltage supply system to the fan in a condition in which the switching voltage is applied to the DC/DC relay.

The DC/DC relay may be electrically connected to the DC voltage supply system for providing an electric connection between the DC voltage supply system and the fan in a condition in which the switching voltage is applied and the temperature of the heat transport liquid is above the predetermined threshold temperature or the predetermined period of time has elapsed.

For keeping the DC voltage supply system in a condition in which it is able to energize electrically operated systems of a vehicle, a charging means may be provided for applying a charging voltage to the DC voltage supply system in a condition in which an AC voltage is applied to the first connecting means. Preferably, the charging means is arranged for generating the charging voltage based on an AC voltage applied to the first connecting means.

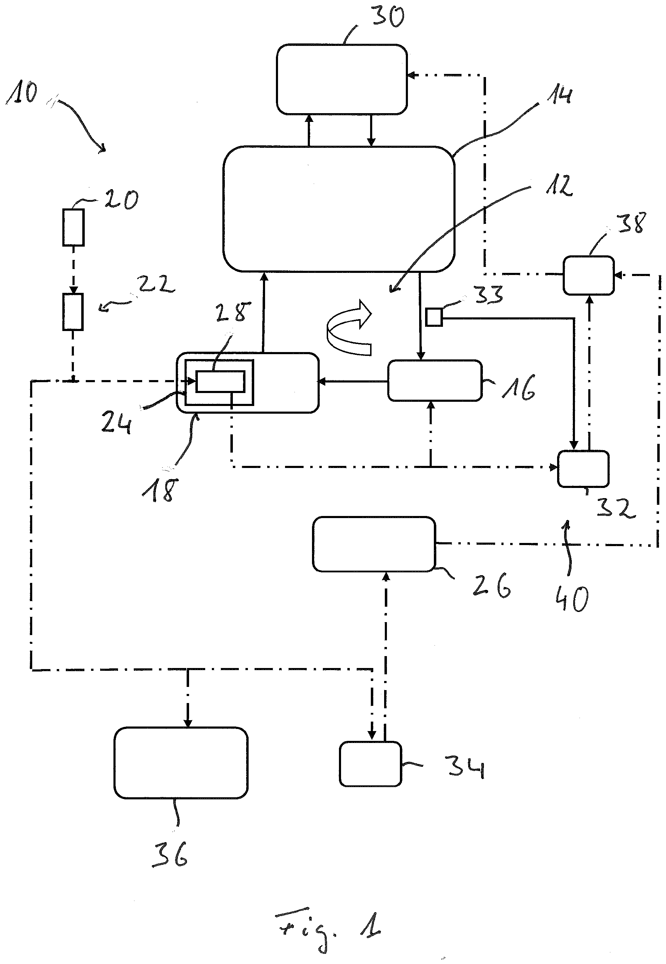

The present invention will now be explained with reference to Fig. 1, which shows a principal construction of a heating system of a vehicle comprising an electrically operated heater.

The heating system 10 shown in Fig. 1 is provided for preheating the coolant circulated in a coolant circuit 12 of an internal combustion engine 14. For circulating the coolant, for example, water, in the coolant circuit 12, a pump 16 is provided. Further, a heater 18 is integrated into the coolant circuit 12 for generating and transferring heat to the coolant circulated by the pump 16 for thereby preheating the coolant as well as the internal combustion engine 14. The heater 18 is electrically operated and is arranged for receiving an AC voltage provided by an AC voltage supply system 20, for example, the mains provided within a garage. For connecting the heater 18 to the AC voltage supply system, a first connecting means 22, for example, comprising a cable connected to the heater 18 or a plug provided in the heater 18 may be provided.

The heater 18 may comprise a controller 24 receiving the AC voltage and energizing one or a plurality of heating coils within the heater by means of which the coolant circulated in the coolant circuit 12 can be heated.

The heating system 10 further comprises a DC voltage supply system 26, for example, comprising one or a plurality of rechargeable batteries of the vehicle. While the AC voltage supply system 20 may be arranged for providing a 230 V AC voltage, the DC voltage supply system 26 may be arranged for providing a 12 V DC voltage.

The pump 16 of the cooling liquid circuit 12 is generally arranged for being energized by a DC voltage. According to the principles of the present invention, therefore, the heating system 10 is arranged for applying a DC voltage generated by an AC/DC converter 28 based on the AC voltage applied to the heater 18 via the first connecting means 22. The AC/DC converter 28 preferably may be arranged within the heater 18, in particular within the controller 24 of the heater 18. The controller 24 and the AC/DC converter 28, respectively, are electrically connected to the pump 16 for applying the DC voltage generated by the AC/DC converter 28 on the basis of the AC voltage applied to the heater 18. For example, this DC voltage may be a voltage having the same voltage level as the DC voltage supplied by the DC voltage supply system 26. If the DC voltage supply system 26 for example is arranged for supplying a 12 V DC voltage, the AC/DC converter may be arranged for generating a 12 V DC voltage on the basis of the 230 V AC voltage supplied by the AC voltage supply system 20.

When providing the electric connection between the AC voltage supply system 20, i.e. the mains, and the heater 18, the AC/DC converter 28 is operated for generating the DC voltage. This DC voltage is applied to the pump 16. Due to this, the pump 16 is put into operation during the heating operation of the heater 18 so that a circulation of the coolant within the coolant circuit 12 is generated during the heating operation of the heater 18. Therefore, not only all the coolant provided within the coolant circuit 12 can be heated, but also the engine 14 through which this coolant is passed. As soon as the heater 18 becomes disconnected from the AC voltage supply system 20, the AC/DC converter 28 stops generating the DC voltage. Due to this, with terminating the operation of the heater 18, the operation of the pump 16 is terminated.

The heating system 10 may further comprise a heat exchanger arrangement 30 through which the coolant circulated in the coolant circuit 12 is passed. In the heat exchanger arrangement 30, heat transported by the coolant acting as a heat transport liquid can be transferred to air which, by means of a fan of the heat exchanger arrangement 30, can be blown into an interior space of the vehicle for additionally preheating this interior space. For operating this fan, the DC voltage supplied by the DC voltage supply system 26 may be applied to the fan via a second connecting means 40. This second connecting means 40 may comprise a thermostat-controlled relay 32 detecting the temperature of the coolant circulated in the coolant circuit 12 by means of a temperature sensor arrangement 33, for example, comprising a bimetal switch. The thermostat-controlled relay 32 further may be connected to the controller 24 and the AC/DC converter 28, respectively, such that the thermostat-controlled relay or switch 32 is arranged to receive two signals. One of these signals is the DC voltage supplied by the AC/DC converter in a situation in which the AC voltage is applied to the heater 18. The second signal is a signal or output provided by the temperature sensor arrangement 33 in a situation in which the temperature of the coolant is above a predetermined threshold temperature.

The connection between the thermostat-controlled relay 32 and it's temperature sensor arrangement 33, which for example may comprise a bimetal member, may be realized in different ways. According to one option there may be a mechanical connection between the temperature sensor arrangement 33 and it's bimetal member, respectively, and a switching portion provided within the thermostat-controlled relay 32, such that a temperature induced deformation of the bimetal member generates a force as a mechanical output providing a switching signal by means of which a switching portion of the thermostat-controlled relay 32 is operated. In another option the temperature sensor arrangement 33 may be arranged for providing an electric output which is applied to the switching portion of the thermostat-controlled relay 32 as a switching signal.

Further it is to be noted that the thermostat-controlled relay 32 and it's temperature sensor arrangement 33, respectively, are shown in Fig. 1 for explaining the function of these members. These members may be provided at other locations within the heating system 10. For example, the thermostat-controlled relay 32 and it's temperature sensor arrangement 33 may be arranged within one common housing and/or may be arranged in association to the heater 18, such that the temperature of the coolant can be detected near to the heater 18.

The thermostat-controlled relay 32 is brought into its conducting condition, if a signal (mechanical or electric) of the heat sensor arrangement 33 indicating a sufficiently high temperature of the coolant is applied thereto. If this is the case, the DC voltage supplied by the AC/DC converter 28 is applied to a DC/DC relay 38 of the second connecting means 40. If the temperature of the coolant is not above the predetermined threshold temperature, which means that the temperature sensor arrangement 33 does not deliver the necessary signal, the connection between the AC/DC converter 28 and the DC/DC relay 38 is interrupted.

The DC voltage generated by the AC/DC converter 28 and applied to the DC/DC relay 38, if the coolant temperature is above the predetermined threshold temperature, is used as a switching voltage for switching the DC/DC relay 38 into its connecting condition. In this condition the DC/DC relay 38 provides an electric connection between the DC voltage supply system 26 and the fan of the heat exchanger arrangement 30. This means that, in a situation in which the temperature of the coolant is high enough, heat is withdrawn from the coolant in the heat exchanger arrangement 30 for heating the interior space of the vehicle. If the temperature is not high enough and therefor due to a lack of the corresponding signal from the heat sensor arrangement 30 the thermostatic-controlled relay 32 disconnects the AC/DC converter 28 from the DC/DC relay 38, the fan of the heat exchanger arrangement 30 is not operated so that, first of all, the coolant and the internal combustion engine 14 can be brought into a desired preheated condition. After this condition has been reached and the temperature of the coolant has exceeded the predetermined threshold temperature, heat transported by the coolant can be used for additionally heating the air blown into the interior space of the vehicle.

In a situation in which the AC voltage is not applied to the heater 18 and, therefore, the AC/DC converter 28 is not operated for generating the DC voltage, no energizing voltage is applied to the pump 16 and, additionally, no switching voltage is applied to the DC/DC relay 38. This means that, in this situation in which neither the heater 18 nor the pump 16 is operated, the fan of the heat exchanger arrangement 30 is not connected to the DC voltage supply system 26 irrespective of the coolant temperature. Therefore, an excessive loss of heat via the heat exchanger arrangement 30 can be avoided.

According to a further option of the heating system 10 of the present invention, a battery charger 34 and/or an additional heater 36 which may be arranged within the interior space of the vehicle may be provided. Both these components may be connected to the AC voltage supply system 20 via the first connecting means 22 or parallel to the first connecting means 22 such that, in a situation in which the AC voltage supplied by the AC voltage supply system 20 is applied to the heater 18, this AC voltage is also applied to the battery charger 34 and/or the heater 36. Therefore, by use of the AC voltage, the DC voltage supply system 26 can be recharged during the heating operation. Additionally, by means of the heater 36, the interior space of the vehicle can be preheated during the heating operation of the heater 18. This heating operation of the heater 36 can be provided in parallel with a heating operation provided by the heat exchanger arrangement 30 and the fan thereof, or can be used as an alternative means.

With the heater and the heating system, respectively, of the present invention, there is provided an arrangement having a simple construction and using components which are normally present in a vehicle, in particular the pump of the coolant circuit and the DC voltage supply system. By means of the AC DC converter a DC voltage can be generated for energizing the pump of the cooling circuit and for switching the DC/DC relay into its electrically connecting condition if the coolant temperature is above the predetermined threshold temperature.

In an alternative embodiment, instead of using the coolant temperature as one of the switching signals for bringing the DC/DC relay 38 into its electrically connecting condition, the DC voltage generated by the AC/DC converter 28 may trigger a timer which, for example, may be provided within the controller 24. This means that the timer starts counting time when the heater 18 starts heating. After a predetermined period of time has elapsed, a switching signal, for example the DC voltage generated by the AC/DC converter 28, for switching the DC/DC relay 38 into its electrically connecting condition is applied to the DC/DC relay 38 and, therefore, the DC voltage of the DC voltage supply system 26 is applied to the fan of the heat exchanger arrangement 30. This alternative embodiment makes use of the fact that it is to be expected that, after the coolant of the coolant circuit 12 has been heated during this predetermined period of time, the temperature thereof is high enough for withdrawing at least a part of the heat transported in the coolant in the heat exchanger arrangement 30 and transferring this heat to the air blown into the interior space of the vehicle by means of the fan of the heat exchanger arrangement 30. As soon as the AC voltage supply system 20 becomes disconnected from the heater 18 and the AC/DC converter 28 is brought into its non-operating condition, applying the switching voltage to the DC/DC relay 38 is terminated and the DC/DC relay 38 is switched into its non-connecting condition and, therefore, applying the DC voltage to the fan is terminated.

## Claims

1. Heating system for heating a heat transport liquid, in particular for heating coolant in a coolant circuit (12) of a combustion engine (14) of a vehicle, comprising:
- a heat transport liquid pump (16) for circulating a heat transport liquid in a heat transport liquid circuit (12),
- an electrically operated heater (18) for heating the heat transport liquid circulated in the heat transport liquid circuit (12) comprising:
- a first connecting means (22) for providing an electric connection between the heater (18) and an AC voltage supply system (20),
- an AC/DC converter (28),
**characterised in that** the AC/DC converter (28) is arranged such as to generate the DC voltage for energizing the heat transport liquid pump (16) in a condition in which an AC voltage is applied to the first connecting means (22).

2. The heater according to claim 1, wherein the first connecting means (22) and/or the AC/DC converter (28) are integrated into the heater (18).

3. The heating system according to claim 1 or 2, wherein the heat transport liquid pump (16) is electrically connected to the AC/DC converter (28) for applying the DC voltage generated by the AC/DC converter (28) to the heat transport liquid pump (16) in a condition in which an AC voltage is applied to the first connecting means (22).

4. The heating system according to one of claims 1 to 3, wherein a DC voltage supply system (26) comprising at least one rechargeable battery is provided.

5. The heating system according to claim 4, wherein a heat exchanger arrangement (30) comprising a fan for transferring heat from the heat transport liquid to air is provided, the system further comprising a second connecting means (40) for applying the DC voltage supplied by the DC voltage supply system (26) to the fan in a condition in which an AC voltage is applied to the first connecting means (22) and a temperature of the heat transport liquid is above a predetermined threshold temperature.

6. The heating system according to claims 5, wherein the second connecting means (40) comprises a thermostat-controlled relay (32).

7. The heating system according to claim 6, wherein a heat exchanger arrangement (30) comprising a fan for transferring heat from the heat transport liquid to air is provided, the system further comprising a second connecting means for applying the DC voltage supplied by the DC voltage supply system (26) to the fan in a condition in which an AC voltage is applied to the first connecting means (22) and a predetermined period of time has elapsed since the heating operation of the heater (18) has started.

8. The heating system according to one of claims 6 or 7, wherein the second connecting (40) means comprises a relay (38) for receiving a switching voltage and for applying the DC Voltage supplied by the DC voltage supply system (26) to the fan in a condition in which the switching voltage is applied to the relay (38).

9. The heating system according claim 8, wherein the relay is a DC/DC relay (38) for receiving the DC voltage generated by the AC/DC converter (28) as the switching voltage and for applying the DC Voltage supplied by the DC voltage supply system (26) to the fan in a condition in which the switching voltage is applied to the DC/DC relay (38).

10. The heating system according to claim 9, wherein the DC/DC relay is electrically connected to the DC voltage supply system (26) for providing an electric connection between the DC voltage supply system (26) and the fan in a condition in which the switching voltage is applied and the temperature of the heat transport liquid is above the predetermined threshold temperature or the predetermined period of time has elapsed.

11. The heating system according to one of claims 4 to 10, wherein a charging means (34) is provided for applying a charging voltage to the DC voltage supply system (26) in a condition in which an AC voltage is applied to the first connecting means (22).

12. The heating system according to claim 11, wherein the charging means (34) is arranged for generating the charging voltage based on an AC voltage applied to the first connecting means (22).

## Patentansprüche

1. Heizsystem zum Erwärmen einer Wärmetransportflüssigkeit, insbesondere zum Erwärmen eines Kühlmittels in einem Kühlkreislauf (12) eines Verbrennungsmotors (14) eines Fahrzeugs, umfassend:
- eine Wärmetransportflüssigkeitspumpe (16) zum Umwälzen einer Wärmetransportflüssigkeit in einem Wärmetransportflüssigkeitskreislauf (12),
- ein elektrisch betriebener Heizer (18) zum Erwärmen der in dem Wärmetransportflüssigkeitskreislauf (12) umgewälzten Wärmetransportflüssigkeit, umfassend:
- ein erstes Verbindungsmittel (22) zum Vorsehen einer elektrischen Verbindung zwischen dem Heizer (18) und einem Wechselspannungs-Versorgungssystem (20),
- einen Wechselspannung/Gleichspannung-Wandler (28),
**dadurch gekennzeichnet, dass** der Wechselspannung/Gleichspannung-Wandler (28) dazu angeordnet ist, die Gleichspannung für die Energieversorgung der Wärmetransportflüssigkeitspumpe (16) in einem Zustand zu erzeugen, in dem eine Wechselspannung an das erste Verbindungselement (22) angelegt ist.

2. Heizer nach Anspruch 1, wobei das erste Verbindungsmittel (22) und/oder der Wechselspannung/Gleichspannung-Wandler (28) in den Heizer (18) integriert sind.

3. Heizsystem nach Anspruch 1 oder 2, wobei die Wärmetransportflüssigkeitspumpe (16) mit dem Wechselspannung/Gleichspannung-Wandler (28) elektrisch verbunden ist, um die von dem Wechselspannung/Gleichspannung-Wandler (28) erzeugte Gleichspannung an die Wärmetransportflüssigkeitspumpe (16) in einem Zustand anzulegen, in dem die Wechselspannung an das erste Verbindungsmittel (22) angelegt ist.

4. Heizsystem nach einem der Ansprüche 1 bis 3, wobei ein Gleichspannungsversorgungssystem (26) vorgesehen ist, welches wenigstens eine wieder aufladbare Batterie umfasst.

5. Heizsystem nach Anspruch 4, wobei eine Wärmetauscher-Anordnung (30), die ein Gebläse für die Übertragung von Wärme von der Wärmetransportflüssigkeit auf Luft umfasst, vorgesehen ist, wobei das System ferner ein zweites Verbindungsmittel (40) umfasst, um die von dem Gleichspannungsversorgungssystem (26) zugeführte Gleichspannung an das Gebläse in einem Zustand anzulegen, in dem eine Wechselspannung an das erste Verbindungsmittel (22) angelegt ist und eine Temperatur der Wärmetransportflüssigkeit über einer vorbestimmten Schwellentemperatur liegt.

6. Heizsystem nach Anspruch 5, wobei das zweite Verbindungsmittel (40) ein thermostatgesteuertes Relais (32) umfasst.

7. Heizsystem nach Anspruch 6, wobei eine Wärmetauscher-Anordnung (30), die ein Gebläse für die Übertragung von Wärme von der Wärmetransportflüssigkeit auf Luft umfasst, vorgesehen ist, wobei das System ferner ein zweites Verbindungsmittel umfasst, um die von dem Gleichspannungsversorgungssystem (26) zugeführte Gleichspannung an das Gebläse in einem Zustand anzulegen, in dem eine Wechselspannung an das erste Verbindungsmittel (22) angelegt ist und wobei seit Beginn des Heizbetriebs des Heizers (18) eine vorbestimmte Zeitdauer verstrichen ist.

8. Heizsystem nach einem der Ansprüche 6 oder 7, wobei das zweite Verbindungsmittel (40) ein Relais (38) zum Empfangen einer Schaltspannung und zum Anlegen der dem Gebläse von dem Gleichspannungsversorgungssystem (26) zugeführten Spannung an das Gebläse in einem Zustand, in dem die Schaltspannung an das Relais (38) angelegt ist.

9. Heizsystem nach Anspruch 8, wobei das Relais ein Gleichspannung/Gleichspannung-Relais (38) zum Empfang einer von dem Wechselspannung/Gleichspannung-Wandler (28) als Schaltspannung erzeugten Gleichspannung ist, und zum Anlegen der von dem Gleichspannungsversorgungssystem (26) zugeführte Gleichspannung an das Gebläse in einem Zustand, in dem die Schaltspannung an das Gleichspannung/Gleichspannung-Relais (38) angelegt ist.

10. Heizsystem nach Anspruch 9, wobei das Gleichspannung/Gleichspannung-Relais mit dem Gleichspannungsversorgungssystem (26) elektrisch verbunden ist, um eine elektrische Verbindung zwischen dem Gleichspannungsversorgungssystem (26) und dem Gebläse in einem Zustand vorzusehen, in dem die Schaltspannung angelegt ist und die Temperatur der Wärmetransportflüssigkeit über der vorbestimmten Schwellentemperatur liegt oder die vorbestimmte Zeitdauer abgelaufen ist.

11. Heizsystem nach einem der Ansprüche 4 bis 10, wobei ein Lademittel (34) zum Anlegen einer Ladespannung an das Gleichspannungsversorgungssystem (26) in einem Zustand vorgesehen ist, in dem eine Wechselspannung an das erste Verbindungsmittel (22) angelegt ist.

12. Heizsystem nach Anspruch 11, wobei das Lademittel (34) dazu angeordnet ist, die Ladespannung basierend auf der an das erste Verbindungsmittel (22) angelegten Wechselspannung zu erzeugen.

## Revendications

1. Système de chauffage pour chauffer une liquide de transport de chaleur, en particulier pour chauffer un réfrigérant dans un circuit de réfrigérant (12) d'un moteur à combustion (14) d'un véhicule, comprenant:
- une pompe de liquide de transport de chaleur (16) pour circuler une liquide de transport de chaleur dans un circuit de liquide de transport de chaleur (12),
- un réchauffeur (18) opéré électriquement pour chauffer le liquide de transport de chaleur circulé dans le circuit de liquide de transport de chaleur (12), comprenant:
- un premier moyen de connexion (22) pour prévoir une connexion électrique entre le réchauffeur (18) et un système d'alimentation en tension alternative (20),
- un convertisseur tension alternative/tension continue (28),
- **caractérisé en ce que** le convertisseur tension alternative/tension continue (28) est arrangé pour générer la tension continue pour fournir de l'énergie à la pompe de liquide de transport de chaleur (16) dans une condition où une tension alternative est appliquée au premier moyen de connexion (22).

2. Réchauffeur selon la revendication 1, où le premier moyen de connexion (22) et/ou le convertisseur tension alternative/tension continue (28) sont intégrés dans le réchauffeur (18).

3. Le système de chauffage selon la revendication 1 ou 2, où la pompe de liquide de transport de chaleur (16) est connectée électriquement au convertisseur tension alternative/tension continue (28) pour appliquer la tension continue générée par le convertisseur tension alternative/tension continue (28) à la pompe de liquide de transport de chaleur (16) dans une condition où la tension alternative est appliquée au premier moyen de connexion (22).

4. Le système de chauffage selon la revendication 1 à 3, où un système d'alimentation en tension continue (26) comprenant au moins une batterie rechargeable est prévu.

5. Le système de chauffage selon la revendication 4, où un arrangement d'échangeur de chaleur (30) comprenant un ventilateur pour transférer de la chaleur du liquide de transport de chaleur à l'air est prévu, le système comprenant en outre un deuxième moyen de connexion (40) pour appliquer la tension continue fournie par le système d'alimentation en tension continue (26) au ventilateur dans une condition où une tension alternative est appliquée au premier moyen de connexion (22) et où une température du liquide de transport de chaleur est plus grande qu'une température limite prédéterminée.

6. Le système de chauffage selon la revendication 5, où le deuxième système de connexion (40) comprend un relais (32) contrôlé par thermostat.

7. Le système de chauffage selon la revendication 6, où un arrangement d'échangeur de chaleur (30) comprenant un ventilateur pour transférer de la chaleur du liquide de transport de chaleur à l'air est prévu, le système comprenant en outre un deuxième moyen de connexion pour appliquer la tension continue fournie par le système d'alimentation en tension continue (26) au ventilateur dans une condition où une tension alternative est appliquée au premier moyen de connexion (22) et où une période de temps prédéterminée s'est écoulée depuis le début de l'opération de chauffage du réchauffeur (18).

8. Le système de chauffage selon les revendications 6 ou 7, où le deuxième moyen de connexion (40) comprend un relais (38) pour recevoir une tension de commutation et pour appliquer la tension continue fournie par le système d'alimentation en tension continue (26) au ventilateur dans une condition où la tension de commutation est appliquée au relais (38).

9. Le système de chauffage selon la revendication 8, où le relais est un relais tension continue/tension continue (38) pour recevoir la tension continue générée par le convertisseur tension alternative/tension continue (28) en tant que tension de commutation et pour appliquer la tension continue fournie par le système d'alimentation en tension continue (26) au ventilateur dans une condition où la tension de commutation est appliquée au relais tension continue/tension continue (38).

10. Le système de chauffage selon la revendication 9, où le relais tension continue/tension continue est connecté électriquement au système d'alimentation en tension continue (26) pour prévoir une connexion électrique entre le système d'alimentation en tension continue (26) et le ventilateur dans une condition où la tension de commutation est appliquée et où la température du liquide de transport de chaleur est plus grande que la température limite prédéterminée ou où la période de temps prédéterminée s'est écoulée.

11. Le système de chauffage selon une des revendications 4 à 10, où un moyen de chargement (34) est prévu pour appliquer une tension de chargement au système d'alimentation en tension continue (26) dans une condition où une tension alternative est appliquée au premier moyen de connexion (22).

12. Le système de chauffage selon la revendication 11, où le moyen de chargement (34) est arrangé pour générer la tension de chargement basée sur la tension alternative appliquée au premier moyen de connexion (22).
